**Europäisches Patentamt**

**European Patent Office**

**Office européen des brevets**

(11) Veröffentlichungsnummer: **0 126 408**
A2

(12) **EUROPÄISCHE PATENTANMELDUNG**

(21) Anmeldenummer: **84105483.6**

(22) Anmeldetag: **15.05.84**

(51) Int. Cl.³: **C 10 J 3/58, C 10 K 3/00**

(30) Priorität: **18.05.83 DE 3317977**

(43) Veröffentlichungstag der Anmeldung: **28.11.84**
**Patentblatt 84/48**

(84) Benannte Vertragsstaaten: **FR GB IT SE**

(71) Anmelder: **PKA Pyrolyse Kraftanlagen GmbH, Wöhrstrasse 13, D-7080 Aalen (DE)**

(72) Erfinder: **Fähnle, Erich, Ing. (grad.), Himmlingerweg 43, D-7080 Aalen/Unterkochen (DE)**

(74) Vertreter: **Lorenz, Werner, Dipl.-Ing., Fasanenstrasse 7, D-7920 Heidenheim (DE)**

(54) **Gaswandler.**

(57)  Ein Gaswandler zur Aufbereitung von Gasen, insbesondere zur Aufbereitung von bei der Pyrolyse von Müll entstandenem Schwelgas und dessen Dissoziation ist mit einer luftdicht abschließenden Zufuhreinrichtung (33) für Koks oder Kohle im oberen Bereich, mit einer Gasabzugsöffnung (32), mit einem Koks- oder Kohlebett (6), mit einer Schlackeaustragseinrichtung (18, 7) und mit einer unter dem Koks- oder Kohlebett (6) einmündenden Luft- und Gaszufuhrleitung (13 bzw. 10) versehen. Der Reaktionsturm (1) ist mit einem rotierenden Verteilerkopf (9) versehen, unter dem die Gas- und die Luftzufuhrleitung (10 bzw. 13) münden. Die Zufuhreinrichtung ist als Zellenradschleuse (33) ausgebildet.

0126408

PATENTANWALT

DIPL.-ING. WERNER LORENZ

Fasanenstraße 7
D-7920 Heidenheim

11.05.1984 - Ok
Akte: BH 1075 EU

Anmelder:
=========

PKA Pyrolyse Kraftanlagen GmbH
Wöhrstr. 13
7080 Aalen

Gaswandler
==========

Die Erfindung betrifft einen Gaswandler zur Aufbereitung
von Gasen, insbesondere zur Aufbereitung von bei der
Pyrolyse von Müll entstandenem Schwelgas und dessen
Dissoziation in einem Reaktionsturm mit einer luftdicht
abschließenden Zufuhreinrichtung für Koks oder Kohle im
oberen Bereich, mit einer Gasabzugsöffnung, mit einem
Koks- oder Kohlebett, mit einer Schlackeaustragseinrichtung
und mit einer Luft- und Gaszufuhrleitung.

In einem Gaswandler oder Reaktionsturm, können die
Schwelgase aufbereitet werden.

Dies ist z.B. bei der Pyrolyse von Müll aus Haushaltungen, Gewerbe und Industrie der Fall, wobei die in den Abfällen enthaltenen organischen Bestandteile sowohl entgast als auch vergast werden. Das dabei gewonnene Gas ist für die direkte Verwertung noch nicht geeignet und wird deshalb erst in einem Gaswandler nachbehandelt.

Ein Gemisch aus Schwelgas, Wasserdampf und Kohlenstaub wird aus einer Schweltrommel, in der die Pyrolyse stattgefunden hat, in den Gaswandler über die Gaszufuhrleitung eingebracht, wobei gleichzeitig Luft unterstöchiometrisch eingeblasen wird. Über einem glühenden Kohlebett wird nicht nur der mitgeführte Kohlenstoff teilweise verbrannt, sondern es erfolgt auch eine partielle Oxidation der Schwelgase, wodurch die hohe Temperatur von ca. 1200°C für die Crackung der langkettigen Kohlenwasserstoffe zu Methan und Wasserstoff erzielt wird. In geringem Umfang entstehen dabei auch Kohlendioxid, Kohlenmonoxid und einfache Kohlenwasserstoffe. In der anschließenden Dissoziationsphase durchläuft das Gemisch aus Wasserdampf, $CO_2$, CO, $H_2$, Methan, Teer, Phenolresten und Stickstoff das glühende Kohlebett, in dem dabei alle Folgereaktionen ablaufen.

Das dabei entstehende Gasgemisch aus Wasserstoff, Kohlenmonoxid, kurzkettigen Kohlenwasserstoffen, den inerten
Gasen Kohlendioxid und Stickstoff, sowie in geringen
Mengen Wasserdampf und höhere Kohlenwasserstoffe verlassen
anschließend den Gaswandler über die Gasabzugsöffnung.
Anschließend wird das Gas dann im allgemeinen von dem mitgeführten Staub gereinigt und in einer Gas-Kühl- und Gas-
Waschanlage endbehandelt, wonach es der Verwertung zugeführt wird. Eine Verwertung kann z.B. in einem Gasmotor
oder einer Gasturbine mit einem Generator zur Stromerzeugung
erfolgen. Weiterhin kann dieses Gas zur Abwärmenutzung
oder als By-pass für Kesselanlagen oder für sonstige Zwecke,
z.B. in der chemischen Industrie als Synthesegas verwendet
werden.

Die bisher bekannten Gaswandler weisen jedoch verschiedene
Nachteile auf. So wurde bisher Kohle oder Koks im oberen
Bereich des Gaswandlers einfach über ein Schleusensystem
in das Innere chargenweise eingebracht. Dies bedeutet, daß
das Kohlebett stets nahezu vollständig abgebrannt werden mußte
und anschließend wurde eine neue Charge eingebracht. Durch
diese schwankende Kohlenbetthöhe litt jedoch der Wirkungsgrad des Gaswandlers. Außerdem bildete sich ein kegelförmiges Kohlebett, was ebenfalls einen ungleichmäßigen Betrieb zur Folge hatte.

Die Schlackeaustragseinrichtung zur Entfernung der Schlacke bestand aus einem Schieber, der entsprechend periodisch geöffnet wurde. Diese Methode war jedoch sehr ungenau und führte zu einem Verlust von Kohle oder Koks, denn die Öffnungszeiten ließen sich nicht so genau regeln.

Auch die Luft- und die Gaszuführung erfolgte nicht überall gleichmäßig, was sich ebenfalls negativ auf das Ergebnis auswirkte.

Der vorliegenden Erfindung liegt daher die Aufgabe zugrunde einen Gaswandler der eingangs erwähnten Art so zu verbessern, daß er einen hohen Wirkungsgrad bei einfachem Aufbau und geringer Wartung aufweist, wobei das Verfahren weitgehend automatisch ablaufen soll.

Erfindungsgemäß wird diese Aufgabe dadurch gelöst, daß unter dem Koks- oder Kohlebett wenigstens annähernd im Bereich der Längsachse des Reaktionsturmes ein rotierender Verteilerkopf angeordnet ist, unter den die Gas- und die Luftzufuhrleitung münden und über dessen Umfang verteilt mehrere Luft/Gasaustrittsöffnungen angeordnet sind.

Durch den rotierenden Verteilerkopf und die entsprechend zugeführten Gas- und Luftzufuhrleitungen erfolgt aufgrund der Rotation eine sehr gleichmäßige Verteilung des Luft/Gasgemisches in dem darüberliegenden Kohlebett. Es ist lediglich dafür zu sorgen, daß der Verteilerkopf aus einem Material besteht, das gegenüber den auftretenden hohen Temperaturen ausreichend hitzebeständig ist. Hierfür kann z.B. keramisches Material verwendet werden, das gleichzeitig auch sehr hart ist.

Für eine noch bessere und gleichmäßigere Verteilung des Luft/Gasgemisches können in dem Verteilerkopf wenigstens zwei übereinander liegende Reihen mit Luft/Gasaustrittsöffnungen in Umfangsrichtung versetzt zueinander liegend angeordnet sein.

Hierbei können die Luft/Gasaustrittsöffnungen jeweils in nach außen hin sich erweiternden Aussparungen münden, die dem Verteilerkopf - im Querschnitt gesehen - wenigstens annähernd ein sternförmiges Aussehen geben.

Das Problem des Antriebes des Verteilerkopfes bei den vorhandenen hohen Temperaturen wurde erfindungsgemäß dadurch gelöst, daß dieser mit einer Mehrkantbohrung,
vorzugsweise einer Sechskantbohrung, versehen ist, in
die das Ende einer komplementär zu der Bohrung ausgebildeten und von unten her in den Reaktionsturm eingeführten Antriebswelle ragt.

Durch diese Ausgestaltung können Schraubverbindungen entfallen, denn der im unteren Bereich des Gaswandlers unter
dem Kohlebett angeordnete Verteilerkopf sitzt durch sein
Eigengewicht sicher auf der von unten her in den Gaswandler eingeführten Antriebswelle.

Eine weitere sehr vorteilhafte Weiterbildung der Erfindung
besteht darin, daß die Mehrkantbohrung exzentrisch zur
Mittellinie des Verteilerkopfes liegt.

Durch diese Ausgestaltung führt der Verteilerkopf
während seiner Rotation eine Schwenkbewegung aus, so daß
der Schlackekuchen in dem Auswurfschacht hammerartig während
der Rotation des Verteilerkopfes getroffen und damit zermalmt wird. Auf diese Weise können Verstopfungen vermieden werden und die Schlacke kann selbständig nach unten
fallen.

Als Schlackeaustragseinrichtung kann unter dem Reaktionsturm eine rotierende Schlackenwanne angeordnet sein, die als Wasserbad ausgebildet ist und deren Ränder außenseitig das untere Ende des Reaktionsturmes überragen.

Durch diese Ausgestaltung wird zum einen der erforderliche luftdichte Abschluß beibehalten und zum anderen läßt sich damit die Schlacke in einfacher Weise austragen, was ggf. auch automatisch erfolgen kann. Gleichzeitig wird die Schlacke dabei durch das Wasserbad abgekühlt.

Da in dem unteren Bereich ein größerer Verschleiß auftreten wird, ist es von Vorteil, wenn dieser aus einzelnen auswechselbaren Ringsegmenten gebildet ist. Diese können dann im Bedarfsfalle auf einfache Weise und sehr schnell ausgewechselt werden.

Zur Erhöhung des Wirkungsgrades des Gaswandlers ist es von Vorteil, wenn die Luftzuleitung mit einer Luftvorwärmeeinrichtung verbunden ist, die eine im oberen Bereich in die Umfangswand des Reaktionsturmes einmündende Kaltluftleitung, sich daran anschließende in oder an der Umfangswand angeordnete Aufheizkanäle und eine zu der Luftzuleitung führende Heißluftauslaßleitung aufweist.

Durch diese Ausgestaltung wird auf einfache Weise eine
Luftvorwärmung erreicht, wobei gleichzeitig auch der
Reaktionsturm und damit auch die abzuziehenden Gase im
oberen Bereich des Reaktionsturmes gekühlt werden.

Die Ausgestaltung der Aufheizkanäle kann beliebig sein.
Eine sehr vorteilhafte und wirkungsvolle Ausbildung besteht jedoch darin, daß die Aufheizkanäle als wenigstens
teilweise über den Umfang des Reaktionsturmes sich erstreckendes Labyrinth mit in vertikaler Richtung verlaufenden Schächten ausgebildet sind.

Durch diese Ausgestaltung wird eine sehr lange Aufheizstrecke auf geringstmöglichem Raum erreicht.

Eine sehr vorteilhafte Weiterbildung der Erfindung, die
auch unabhängig von der Ausgestaltung des Verteilerkopfes
und/oder der Schlackenaustragseinrichtung für Gaswandler
der eingangs erwähnten Art geeignet ist, besteht darin,
daß die Zufuhreinrichtung als Zellenradschleuse ausgebildet ist. An Stelle einer Zugabe von Kohle oder Koks
chargenweise über eine Schleuse mit zwei Absperrschiebern wird nunmehr kontinuierlich oder auch in kurzen periodischen Abständen die erforderliche Menge Kohle oder
Koks zugegeben. Dabei kann die Zugabe auf einfache Weise
so gesteuert werden, daß sich eine im wesentlichen
gleiche Höhe des Koks- bzw. Kohlebettes einhalten läßt.
Durch diese Ausgestaltung wird eine sehr gleichmäßige
Behandlung des Gases mit hohem Wirkungsgrad erreicht.
Es ist lediglich erforderlich, daß die Zellenradschleuse
aus entsprechend hitzebeständigem Material ausgebildet
ist.

Eine weitere sehr vorteilhafte Ausgestaltung im Zusammenhang mit einer Zufuhreinrichtung, die im oberen Bereich
des Reaktionsturmes angeordnet ist, besteht darin, daß
unter dieser Zufuhreinrichtung ein Verteilfächer angeordnet ist, dessen Mittelpunkt wenigstens annähernd im
Bereich der Längsachse des Reaktionsturmes liegt, wobei
von dessen Mittelpunkt aus in radialer Richtung über dem
Umfang verteilt mehrere Verteilrinnen unterschiedlicher
Länge ausgehen.

0126408

Durch den Verteilfächer wird in einfacher Weise verhindert, daß sich während der Befüllung in der Mitte ein kegelförmiger Aufbau bildet. Vielmehr wird die Kohle bzw. der Koks durch die Verteilrinnen weitgehend gleichmäßig in den Innenraum des Reaktionsturmes verteilt. Am Ende der Verteilrinnen, die im allgemeinen nach außen zu geneigt sind, fällt entsprechend Kohle bzw. Koks nach unten auf das Kohlebett, wobei durch dessen unterschiedlicher Länge die gleichmäßige Verteilung erreicht wird.

Nachfolgend ist anhand der Zeichnung ein Ausführungsbeispiel der Erfindung, aus dem weitere erfindungsgemäße Merkmale hervorgehen prinzipmäßig beschrieben.

Es zeigen:

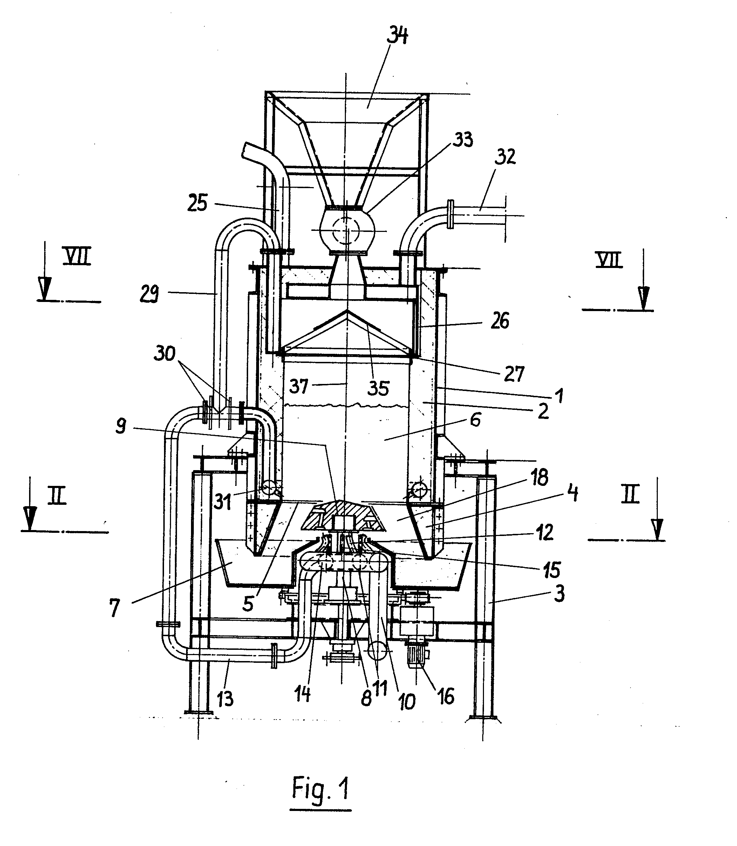

Fig. 1          Eine Gesamtansicht eines Gaswandlers in schematischer Darstellung;

Fig. 2          Einen Horizontalschnitt nach der Linie II - II der Fig. 1 in vergrößerter Darstellung;

Fig. 3          Eine Draufsicht auf den erfindungsgemäßen Verteilerkopf in vergrößerter Darstellung;

Fig. 4        Einen Schnitt nach der Linie IV - IV der Fig. 3;

Fig. 5        Einen Schnitt nach der Linie V - V der Fig. 4;

Fig. 6        Einen Schnitt nach der Linie VI - VI der Fig. 4;

Fig. 7        Einen Schnitt nach der Linie VII - VII der Fig 1 in vergrößerter Darstellung;

Fig. 8        Einen Teilschnitt in Umfangsrichtung durch die Luftvorwärmeinrichtung nach der Linie VIII - VIII der Fig. 7.

Das aufzubereitende Schwelgas wird im allgemeinen in
einer horizontal liegenden indirekt beheizten Schweltrommel bei einer Temperatur von 400 - 500° C unter Ausschluß von Sauerstoff aus den organischen Bestandteilen
enthalten. Dieses Pyrolyseverfahren ist hinreichend bekannt, weshalb es an dieser Stelle nicht näher beschrieben
wird.

Die Aufbereitung und Dissoziation dieses Schwelgases
erfolgt in dem erfindungsgemäßen Gaswandler. Statt Schwelgas kann ggf. auch jede andere Gasart verwendet werden,
die in einem Gaswandler aufbereitet werden soll.

Der Gaswandler weist einen Reaktionsturm 1 auf, der auf
seiner Innenseite mit einer Ausmauerung 2 versehen
und auf Stützen 3 gelagert ist.

Der untere Bereich des Reaktionsturmes ist aus auswechselbaren Ringsegmenten 4 gebildet.

Der Reaktionsturm 1 ist auf seiner Unterseite offen, ragt
jedoch mit den unteren Enden der Ringsegmente 4 in eine
Schlackenwanne 7, die bei Betrieb mit Wasser gefüllt ist
und zwar bis zu einem Niveau, das über den unteren Enden
der Ringsegmente 4 liegt. Hierzu überragen die Ränder
des Wasserbades 7 außenseitig das untere Ende des Reaktionsturmes 1 entsprechend. Auf diese Weise ist ein Luftabschluß nach unten gegeben.

Die Schlackenwanne 7 ist als Ringkanal ausgebildet, wobei
im mittleren Bereich eine zentrale Antriebswelle 8 für
einen Verteilerkopf 9 durchgeführt ist. Die Wellenlagerung ist selbstverständlich auch hier luftdicht ausgeführt. In der Schlackenwanne 7 bis auf Höhe Unterkante
Verteilkopf 9 befindet sich Asche. Darüber liegt ein
Kohlebett 6.

In den Bereich des Verteilerkopfes mündet auch die Gaszufuhrleitung
10, die mit einer nicht dargestellten Schweltrommel verbunden ist. Die Gaszufuhrleitung 10 endet in einem Ringkanal 11, von dem aus in vertikaler Richtung nach oben über den Umfang verteilt mehrere Zuleitungen 12 führen, die unterhalb des Verteilerkopfes 9 enden.

Über eine Luftzufuhrleitung 13, welche ebenfalls in einer Ringleitung 14 endet, welche im Inneren der Ringleitung 11 liegt,wird die erforderliche Luft ebenfalls über von der Ringleitung 14 vertikal nach oben abzweigende Luftleitungen 15 zugeführt. Die Luftleitungen 15 enden ebenfalls kurz unterhalb des Verteilerkopfes 9. Sie sind außerdem vorzugsweise jeweils direkt neben den Gaszuleitungen 10 angeordnet.

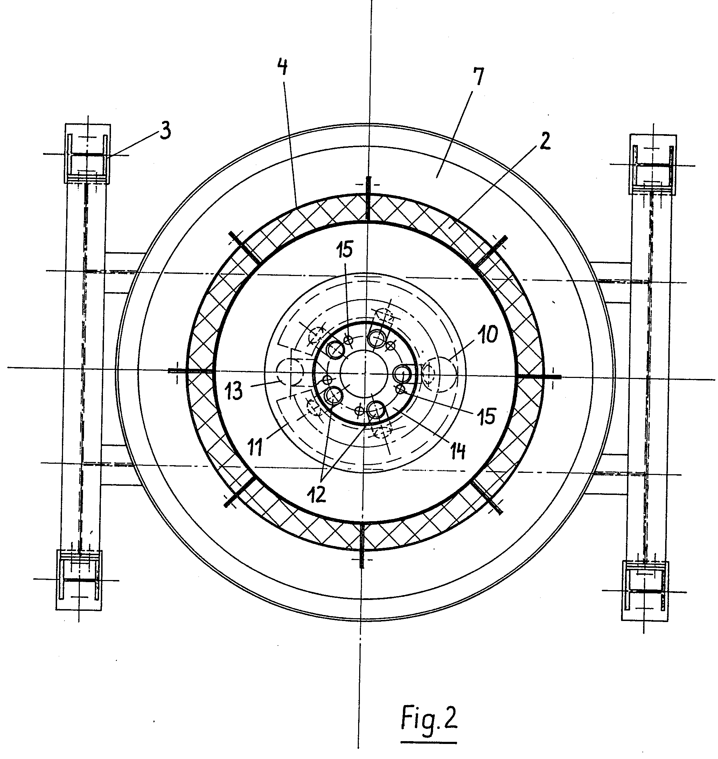

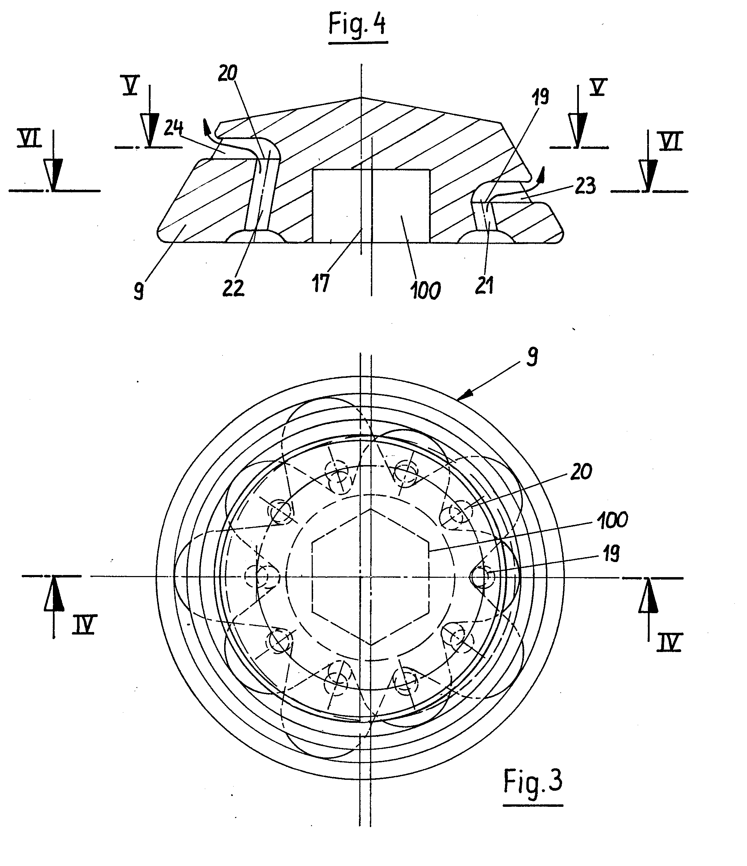

Die Ausgestaltung der Luft/Gaszufuhrleitungen und des Verteilerkopfes sind aus den vergrößerten Darstellungen in den Figuren 2 - 6 deutlicher ersichtlich.

Über einen Motor 16 wird die Schlackenwanne 7 in Rotation versetzt, während über einen gesonderten Antrieb (nicht dargestellt) der Verteilerkopf 9 ebenfalls in Rotation versetzt wird.

Der Verteilerkopf 9 aus keramischem Material weist eine rotationssymmetrische Form auf, die nach oben zu sich verjüngt. Weiterhin ist der Verteilerkopf 9 mit einer Sechskantbohrung 100 versehen, die jedoch um ein geringes Maß von der Mittelachse 17 des Verteilerkopfes versetzt liegt. Dadurch führt der Verteilerkopf während der Rotation eine "eiförmige" Bewegung aus, wodurch sich ein Ringspalt 18 zwischen dem Verteilerkopf 9 und den Innenwänden der Ringsegmente 4 ändert. Der Ringspalt 18 dient als Auswurfschacht für die von dem Koksbett 6 nach unten fallende Schlacke. Durch den sich verändernden Ringspalt 18 wird diese dabei zermalmt und kann ohne Behinderung in das Wasserbad fallen.

Der Verteilerkopf 9 ist über dessen Umfang verteilt mit mehreren Luft/Gasaustrittsöffnungen 19 und 20 versehen, die in zwei Reihen übereinander und versetzt zueinander angeordnet sind. Die Luft/Gasaustrittsöffnungen 19 und 20 stehen über leicht gegen die Vertikalrichtung schräggestellte Verbindungsbohrungen 21 und 22 mit der Unterseite des Verteilerkopfes 9 in Verbindung. Auf diese Weise erhalten die Luft/Gasaustrittsöffnungen 19 und 20 von den Zuleitungen 12 und 15 das Luft/Gasgemisch.

Die Luft/Gasaustrittsöffnungen 19 und 20 münden jeweils in nach außen hin sich erweiternden Aussparungen 23 bzw. 24.

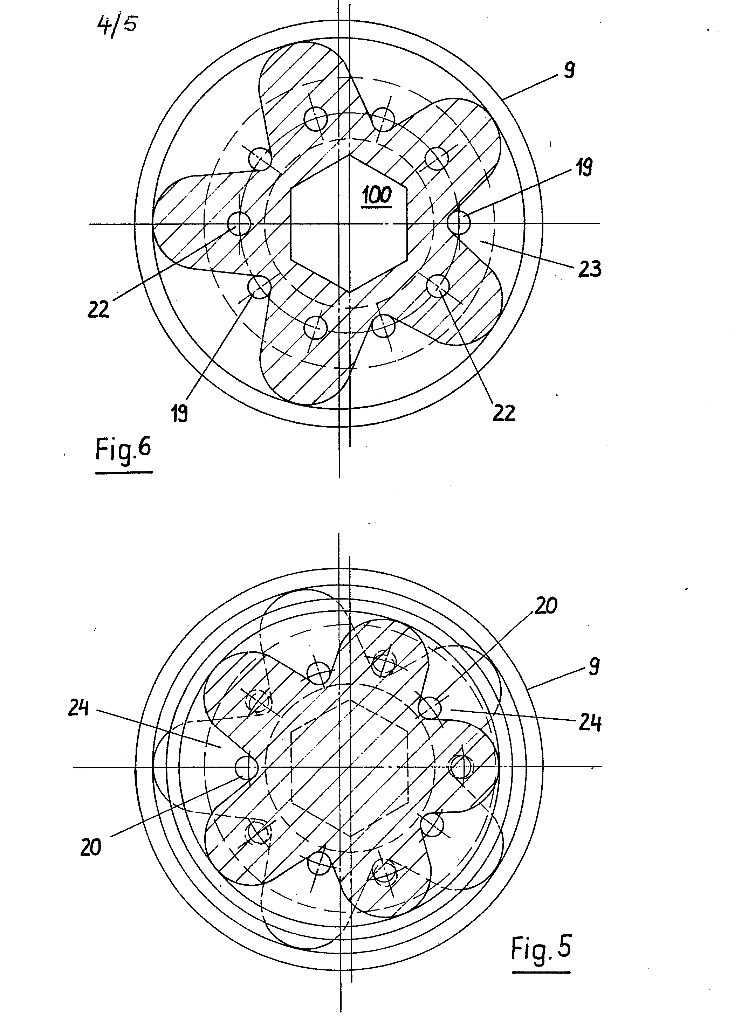

Wie insbesondere aus den Figuren 5 und 6 ersichtlich ist, besitzt der Verteilerkopf 9 damit in dem Bereich der Luft/Gasaustrittsöffnungen 19 und 20 jeweils ein sternförmiges Aussehen.

Durch diese Ausgestaltung des Verteilerkopfes in Verbindung mit den Gas- und Luftzuleitungen und Verteilleitungen ergibt sich eine optimale Verteilung des Luft/ Gasgemisches im Inneren des Reaktionsturmes 1.

Ein Teil des Luft/Gasgemisches wird oberhalb der Enden der Zuleitungen 12 und 15 seitlich unter dem Verteilerkopf 9 ausströmen, ein weiterer Teil wird über die Aussparungen 23 und ein dritter Teil über die Aussparung 24 ausströmen, wobei - wie ersichtlich - die Aussparungen 23 und 24 über dem Umfang des Verteilerkopfes 9 versetzt zueinander angeordnet sind.

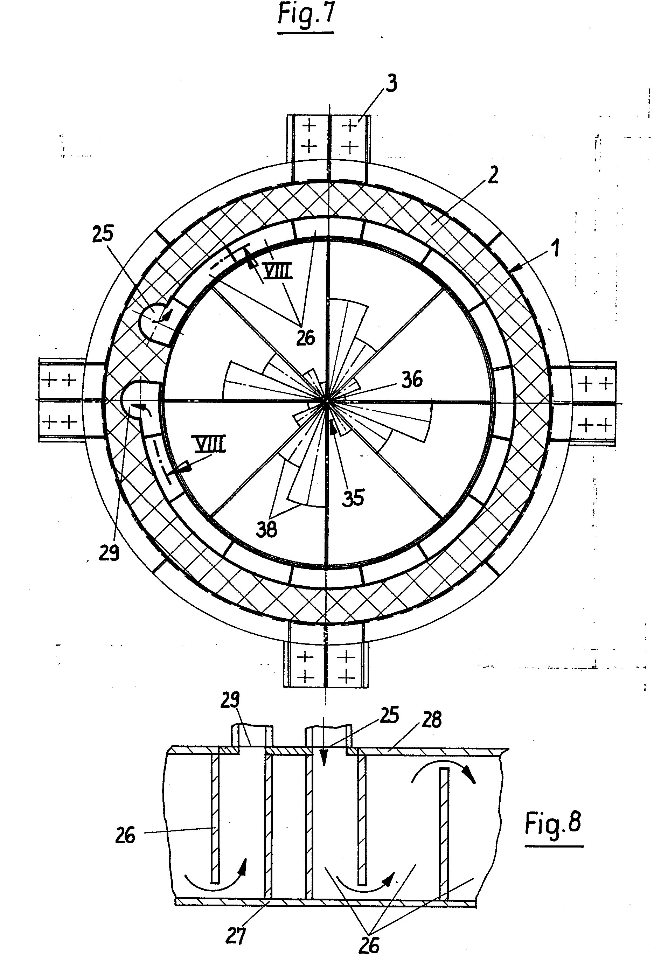

Die Luftzufuhr zu der Luftzufuhrleitung 13 erfolgt über eine Vorwärmeeinrichtung, die eine Kaltluftleitung 25 aufweist, die im oberen Brennbereich in die Umfangswand des Reaktionsturmes 1 einmündet. Der Aufbau der Luftvorwärmeeinrichtung ist aus den Figuren 7 und 8 deutlicher ersichtlich. An die Kaltluftleitung 25 schließen sich eine Vielzahl von in der Umfangswand angeordneten Aufheizkanälen 26 an, die in Form eines Labyrinthes in vertikaler Richtung über die Umfangswand verteilt verlaufen. Die Aufheizkanäle 26 bilden damit vertikale Schächte, wobei diese jeweils abwechselnd auf ihrer Unterseite bzw. ihrer Oberseite mit Ringblechen 27 bzw. 28 verbunden sind, welche in der Umfangswand des Reaktionsturmes 1 angeordnet sind. Auf diese Weise kann die zugeführte Kaltluft 25 in Pfeilrichtung (siehe Fig. 8) durch die Schächte strömen und wird damit während ihres Weges über nahezu den gesamten Umfang des Reaktionsturmes 1 stark erhitzt, bevor sie über eine Heißluftauslaßleitung 29 zu der Luftzufuhrleitung 13 geführt wird. Zur besseren Steuerung des Gaswandlers, insbesonders während der Aufheizphase, kann in der Heißluftauslaßleitung 29 noch eine Abzweigung mit nicht näher dargestellten Absperrschiebern 30 vorgesehen sein, wodurch im Bedarfsfalle auch Luft direkt über eine Ringleitung 31 in das Koksbett 6 seitlich eingeblasen werden kann.

Im oberen Bereich des Reaktionsturmes 1 befindet sich ein Gasabzug 32. Ebenfalls im oberen Bereich ist eine Zellenradschleuse 33 angeordnet, über der ein trichterförmiger Koksbunker 34 liegt. Über die Zellenradschleuse 33 wird die erforderliche Koksmenge luftdicht in das Innere des Reaktionsbehälters eingebracht.

0126408

Zusätzlich befindet sich in dem oberen Bereich des Reaktionsturmes 1 unterhalb der Zellenradschleuse 33 ein Verteilfächer 35, welcher im Querschnitt gesehen kegelförmig ausgebildet ist.

Die Ausgestaltung des Verteilfächers 35 ist aus der Fig. 7 deutlicher ersichtlich. Der Mittelpunkt 36 des Verteilfächers 35 liegt wenigstens annähernd im Bereich der Längsachse 37 des Reaktionsturmes 1. Von dem Mittelpunkt 36 aus gehen in radialer Richtung über den Umfang verteilt mehrere nach außen geneigte Verteilrinnen 38 ab. Insbesondere die nebeneinander liegenden Verteilrinnen 38 weisen unterschiedliche Längen auf. Dies bedeutet, daß über die Zellenradschleuse 33 eingebrachter Koks, der auf den Verteilfächer 35 fällt und dabei je nach Länge der Verteilrinnen 38 mehr oder weniger nach außen transportiert wird, relativ gleichmäßig über den Innenraum des Reaktionsturmes 1 verteilt nach unten auf das Koksbett 6 zu dessen Nachfüllung fällt. Auf diese Weise wird ein weitgehend egalisiertes Niveau des Koksbettes eingehalten.

PATENTANWALT

DIPL.-ING. WERNER LORENZ

0126408

Fasanenstraße 7
D-7920 Heidenheim

11.05.1984 - Ok

BH 1075 EU

Anmelder:
=========


PKA Pyrolyse Kraftanlagen GmbH

Wöhrstr. 13

7080 Aalen

P a t e n t a n s p r ü c h e

================================



1) Gaswandler zur Aufbereitung von Gasen, insbesondere zur Aufbereitung von bei der Pyrolyse von Müll entstandenem Schwelgas und dessen Dissoziation in einem Reaktionsturm mit einer luftdicht abschließenden Zufuhreinrichtung für Koks oder Kohle im oberen Bereich, mit einer Gasabzugsöffnung, mit einem Koks- oder Kohlebett, mit einer Schlackeaustragseinrichtung und mit einer Luft-

und Gaszufuhrleitung

d a d u r c h   g e k e n n z e i c h n e t, daß

unter dem Koks- oder Kohlebett (6) wenigstens annähernd im Bereich der Längsachse des Reaktionsturmes (1)
ein rotierender Verteilerkopf (9) angeordnet ist,
unter dem die Gas- und die Luftzufuhrleitung (10,13)
münden und über dessen Umfang verteilt mehrere Luft/
Gasaustrittsöffnungen (19, 20) angeordnet sind.

2) Gaswandler nach Anspruch 1
d a d u r c h   g e k e n n z e i c h n e t, daß
in dem Verteilerkopf (9) wenigstens zwei übereinander
liegende Reihen mit Luft/Gasaustrittsöffnungen (19, 20)
in Umfangsrichtung versetzt zueinander liegend angeordnet sind.

3) Gaswandler nach Anspruch 1 oder 2
d a d u r c h   g e k e n n z e i c h n e t, daß
die Luft/Gasaustrittsöffnungen (19, 20) jeweils in
nach außen hin sich erweiternden Aussparungen (23, 24)
münden, die dem Verteilerkopf (9) - im Querschnitt gesehen - in diesen Bereichen wenigstens annähernd ein
sternförmiges Aussehen geben.

4) Gaswandler nach einem der Ansprüche 1 - 3
d a d u r c h   g e k e n n z e i c h n e t, daß
der Verteilerkopf (9) mit einer Mehrkantbohrung (100),
vorzugsweise einer Sechskantbohrung, versehen ist, in die das Ende einer komplementär zu der Bohrung ausgebildeten und von unten her in den Reaktionsturm eingeführten Antriebswelle (8) ragt.

5) Gaswandler nach Anspruch 4

d a d u r c h   g e k e n n z e i c h n e t, daß
die Mehrkanbohrung (100) exzentrisch zur Mittellinie
(17) des Verteilerkopfes (9) liegt, und daß ein Ringspalt (18) zwischen dem Verteilerkopf (9) und der Umfangswand des Reaktionsturmes (1) in diesem Bereich
einen Auswurfschacht für die Schlacke bildet.

6) Gaswandler nach Anspruch 5

d a d u r c h   g e k e n n z e i c h n e t , daß
die Mittellinie der Antriebswelle (8) mit der Längsachse des Reaktionsturmes (1) koaxial ist.

7) Gaswandler nach einem der Ansprüche 1 - 6

d a d u r c h   g e k e n n z e i c h n e t, daß
der Verteilerkopf (9) aus keramischem Material besteht.

8) Gaswandler nach einem der Ansprüche 1 - 7

d a d u r c h   g e k e n n z e i c h n e t, daß
als Schlackenaustragseinrichtung unter dem Reaktionsturm
(1) eine rotierende Schlackenwanne (7) angeordnet ist, die als Wasserbad ausgebildet ist, deren Ränder außenseitig das untere Ende des Rekationsturmes (1) überragen.

9) Gaswandler nach einem der Ansprüche 1 - 8

d a d u r c h   g e k e n n z e i c h n e t ,  daß

der untere Bereich des Reaktionsturmes (1) aus einzelnen auswechselbaren Ringsegmenten (4) gebildet ist.

10) Gaswandler nach einem der Ansprüche 1 - 9

d a d u r c h   g e k e n n z e i c h n e t ,  daß

die Luftzufuhrleitung (13) mit einer Luftvorwärmeeinrichtung verbunden ist, die eine im oberen Bereich in die Umfangswand des Reaktionsturmes einmündende Kaltluftleitung (25), sich daran anschließende in oder an der Umfangswand angeordnete Aufheizkanäle (26) und eine zu der Luftzuleitung führende Heißluftauslaßleitung (29) aufweist.

11) Gaswandler nach Anspruch 10

d a d u r c h   g e k e n n z e i c h n e t ,  daß

die Aufheizkanäle (26) als wenigstens teilweise über den Umfang des Reaktionsturmes (1) sich erstreckendes Labyrinth mit in vertikaler Richtung verlaufenden Schächten ausgebildet sind.

12) Gaswandler zur Aufbereitung von Gasen, insbesondere
zur Aufbereitung von bei der Pyrolyse von Müll entstandenem Schwelgas und dessen Dissoziation in einem
Reaktionsturm mit einer luftdicht abschließenden Zufuhreinrichtung für Koks oder Kohle im oberen Bereich,
mit einer Gasabzugsöffnung, mit einem Koks- oder Kohlebett, mit einer Schlackeaustragseinrichtung und mit
einer Luft- und Gaszufuhrleitung

d a d u r c h   g e k e n n z e i c h n e t, daß
die Zufuhreinrichtung als Zellenradschleuse (33) ausgebildet ist.

13) Gaswandler nach Anspruch 12
d a d u r c h   g e k e n n z e i c h n e t, daß
im Innenraum des Reaktionsturmes (1) unter der Zufuhreinrichtung (33) ein Verteilfächer (35) angeordnet ist,
dessen Mittelpunkt (36) wenigstens annähernd im Bereich der Längsachse des Reaktionsturmes (1) liegt, wobei von dessem Mittelpunkt (36) aus in radialer Richtung über den Umfang verteilt mehrere nach außen geneigte Verteilrinnen (38) unterschiedlicher Länge ausgehen.

14) Gaswandler nach einem der Ansprüche 1 - 13 d a d u r c h   g e k e n n z e i c h n e t, daß die Luftzufuhrleitung (13) und die Gaszufuhrleitung (10) jeweils in einer Ringleitung (14 bzw. 11) enden, von der aus jeweils mehrere über den Umfang verteilte Zuleitungen (15 bzw. 12) nach oben führen, welche unter dem Verteilerkopf (9) enden.

Fig. 1

Fig.2

Fig. 4

Fig. 3

0126408

Fig.6

Fig.5

## Fig.7

## Fig.8